# EUROPEAN PATENT APPLICATION

(11) **EP 3 385 654 A1**
(43) Date of publication of application: **10.10.2018**
(21) Application number: 18165226.4
(22) Date of filing: 29.03.2018
(51) Int. Cl.: F28F 9/02, F28F 9/26, F28D 1/053, F16L 13/08

(54) **A MANIFOLD FOR A HEAT EXCHANGER**

(30) Priority: 05.04.2017 GB 201705510; 09.02.2018 EP 18156113
(71) Applicant: Denso Marston Ltd., Shipley, Yorkshire BD17 7JR (GB); DENSO CORPORATION, Kariya-city, Aichi 448-8661 (JP)
(72) Inventor: Roberts, Andrew, Shipley, Yorkshire BD17 7JR (GB); Timmins, Martin, Shipley, Yorkshire BD17 7JR (GB)
(74) Representative: Dempster, Benjamin John Naftel

(57) **Abstract**

A manifold for a heat exchanger comprises a first tubular manifold part 30 and a second tubular manifold part 32, the ends of the first and second manifold parts 30, 32 being connected through a baffle 34 which is arranged to block the tubular openings 22, the baffle 34 substantially separating the ends 24 of the first and second manifold parts 30, 32.

## Description

The invention relates to a manifold for a heat exchanger.

Heat exchanger assemblies are known in which there are two or more heat exchange cores connected together. The cores are multi-pass cores used on a multi-flow type condenser. A baffle is provided between the heat exchangers of the assembly, but there can be leakage across the baffle. Leakage of oil from an oil cooler into a fuel circuit is a particular problem, especially from the point of view of emissions.

According to one aspect of the invention there is provided a manifold for a heat exchanger with more than one core, the manifold comprising a first tubular manifold part and a second tubular manifold part, the ends of the first and second manifold parts being connected through a baffle which is arranged to block the tubular openings, the baffle substantially separating the ends of the first and second manifold parts.

In this way, any leakage between one of the manifold parts and the baffle will be to atmosphere, rather than into the other manifold part.

Preferably, the cross-section of the baffle is larger than the cross-sections of the tubular openings at the ends of the first and second manifold parts. Indeed, preferably, the cross-section of the baffle is the same as or larger than the end of the first manifold part to which it is connected and the same as or larger than the cross-section of the end of the second manifold part to which it is connected.

The baffle may include a shoulder to lie inside the bore of the first manifold part and may include a second shoulder to lie inside the bore of the second manifold part. The shoulder may extend around at least a quarter of the periphery of the baffle, preferably at least a third of the periphery. Preferably the shoulder extends over no more than two thirds of the periphery and preferably extends over a half or less of the periphery. In a particular embodiment, the shoulder extends over half of the periphery of the baffle.

The perimeter of the baffle may lie flush with the tubular outer surfaces of the first and second manifold parts in one embodiment. In another embodiment, the baffle is larger in cross-section at the ends of the manifold parts and may include an axially extending rim.

Where a shoulder and a rim are provided, the shoulder and rim may define a channel between them which receives the end of the manifold part.

The baffle is preferably attached to each of the tubular manifold parts. The baffle may be attached by welds, such as tack welds, or may be attached by brazed connections. Where the contact between each manifold part and the baffle does not include a clad surface, the braze connection may be through braze paste applied to one of the contact surfaces.

The manifold is preferably a manifold for a tube and fin heat exchanger core and each manifold part may therefore include a series of slots to receive tubes. Preferably, the slots are equally spaced along the length of the manifold. This makes it easier to assemble a heat exchanger including the manifold on a build machine, as a uniform, regularly arranged set of tubes and fins can be mounted in the building machine jig and the manifold can then be offered up to receive the ends of the tubes in the slots. No change in the set up of the tubes or arrangement of the tubes is necessary in order to take account of the position of the baffle. In one embodiment, this can be achieved by defining a slot in the baffle. The tube in the baffle slot would not have any fluid flow or perform any function of heat exchange. The tube in the baffle slot acts as a thermal barrier reducing the thermal gradient between the two adjacent cores. In an alternative embodiment, the baffle slot is sufficiently wide that the tube does not touch or braze to the baffle. In this way, the tube in the baffle slot will be able to expand and contract freely, further reducing thermal stress on the two adjacent tubes, which will increase thermal cycle durability.

Each manifold part may include braze cladding on its outer surface.

The baffle may be made in any suitable way, such as machining from solid, or casting, but preferably is forged.

The manifold may include a third tubular manifold part, the ends of the second manifold part and third manifold part being connected through a baffle which is arranged to block the tubular openings, the baffle substantially separating the ends of the second and third manifold parts.

The cross section of the baffle may be larger than the cross sections of the tubular openings at the ends of the first and second manifold parts. The baffle may be a baffle including any or none of the features as described above.

According to another aspect of the invention there is provided a heat exchanger assembly including at least two heat exchange cores and a manifold according to the preceding aspect of the invention.

According to another aspect of the invention there is provided a method of assembling a heat exchanger for assembly for brazing, the method comprising:
arranging tubes and fins in a build machine jig, attaching a first manifold part to a baffle and attaching a second manifold part to a baffle, so that the baffle blocks the tubular opening at one end of each manifold part, the baffle substantially separating the ends of the second and third manifold parts;
offering up the manifold, being comprised of the two manifold parts and the baffle, to the cores so that the tubes are received in the slots in the manifold parts;
heating the assembly to braze the parts together.

According to another aspect of the invention there is provided a method of assembling a heat exchanger for assembly for brazing, the method comprising:
arranging tubes and fins in a build machine jig, assembling a manifold according to the first aspect of the invention by attaching the first manifold part to the baffle and attaching the second manifold part to the baffle;
offering up the manifold to the cores so that the tubes are received in the slots in the manifold parts;
heating the assembly to braze the parts together.

The baffle may be attached to the manifold parts in any suitable way prior to brazing. In one embodiment, the baffle may be an interference fit in the end of each manifold part. In another embodiment, the baffle may be tack welded to the manifold parts.

The baffle may include a shoulder to lie inside the bore of the first manifold part and may include a second shoulder to lie inside the bore of the second manifold part. The method may include the step of applying braze paste to each shoulder so that the braze paste is sandwiched between the shoulder and the manifold part and creates a brazed joint between the shoulder and manifold parts after heating and cooling. In an alternative embodiment, the method may include inserting a braze ring between the baffle and each manifold part. In a further embodiment, each manifold part may be double clad, so that it includes braze cladding on both its inner and outer surfaces.

In the step of offering up the manifold to the tubes, the tubes are preferably inserted into the slots to a limited distance such that a gap is left between the ends of the tubes and the shoulders of the baffle.

According to a further aspect of the invention there is provided a manifold for a heat exchanger with more than one core, the manifold comprising a first tubular manifold part and a second tubular manifold part, the ends of the first and second manifold parts being connected through a baffle which is arranged to block the tubular openings, the cross-section of the baffle being larger than the cross-sections of the tubular openings at the ends of the first and second manifold parts.

Embodiments of the invention will now be described by way of example and with reference to the accompanying drawings, in which:
Figure 1 is a front elevation of a known heat exchanger;
Figure 2 is a side elevation in cross section of a manifold in a first embodiment of the invention;
Figure 3 is a heat exchanger including two manifolds of Figure 1;
Figure 4 is a perspective view of a baffle of the manifold of Figure 2;
Figure 5 is a fragmentary detail cross sectional elevation at A of Figure 3;
Figure 6 is a fragmentary detail cross sectional perspective view at A of Figure 3;
Figure 7 is a side elevation in cross section of a manifold in a second embodiment of the invention;
Figure 8 is a perspective view of the baffle of the manifold of Figure 7;
Figure 9 is a fragmentary detail elevation in cross section of a heat exchanger including the baffle of Figure 8;
Figure 10 is a fragmentary detail elevation in cross section of a heat exchanger in a third embodiment;
Figure 11 is a perspective cross sectional view of the baffle of Figure 10;
Figure 12 is a fragmentary detail elevation in cross section of a heat exchanger in a fourth embodiment;
Figure 13 is the view of Fig 5 with a baffle with a parallel sided slot; and
Figure 14 is the view of Fig 6 with a baffle with a parallel sided slot.

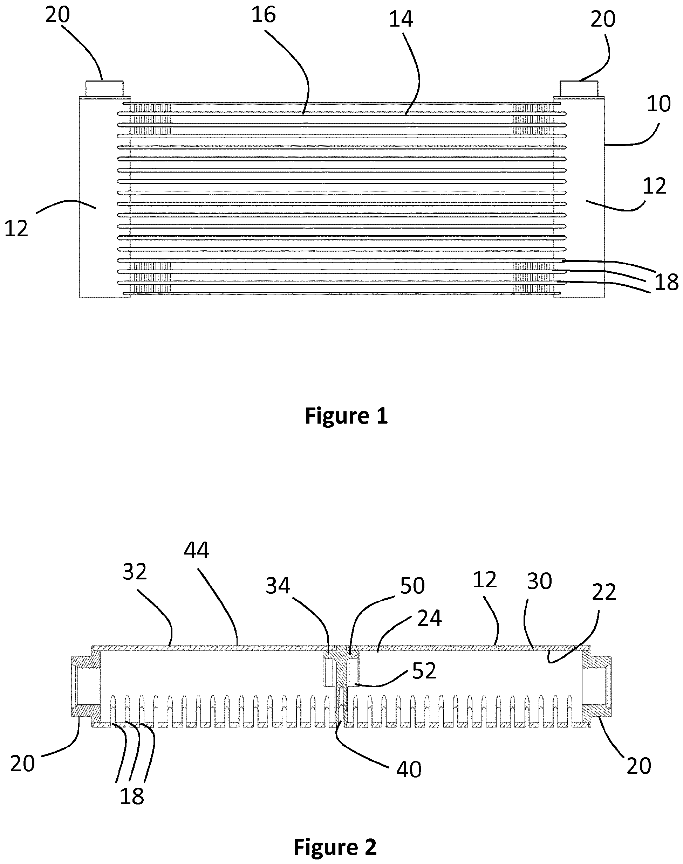

Figure 1 shows a known heat exchanger 10 comprising two cylindrical tubular manifolds 12 and a tube and fin core 14. The tubes 16 of the core 14 are equally spaced and are received in equally spaced slots 18 in the manifolds 12. At each end of the core there is a side member 8 in the form of a plate parallel to the final tube 16. Each manifold 12 is in the form of an aluminium profile with a layer of aluminium alloy cladding on the outside. A cap (not shown) blocks one end of each manifold 12 and at the other end a connector 20 is provided, one connector 20 acting as an inlet and the other connector 20 acting as an outlet from the heat exchanger 10.

In order to assemble the known heat exchanger 10, the tubes and fins making up the core 14 are assembled in the jig of a build machine (not shown). A manifold 12 is then offered up to the core 14 so that the ends of the tubes 16 are received in the slots 18 of the manifold 12. Once both manifolds 12 are in place, the assembled heat exchanger is heated in order to create a brazed joint between the manifolds 12 and the tubes 16.

The first embodiment of the invention is shown in Figures 2 to 6 and only the differences from the heat exchanger of Figure 1 will be described. The same reference numerals will be used for equivalent features.

Each manifold 12 of the heat exchanger 10 of the first embodiment is made up of two tubular manifold parts 30, 32 connected through a baffle 34. Each tubular manifold part 30, 32 is an aluminium profile with aluminium alloy cladding on the outside, and a series of equally spaced slots 18, as before.

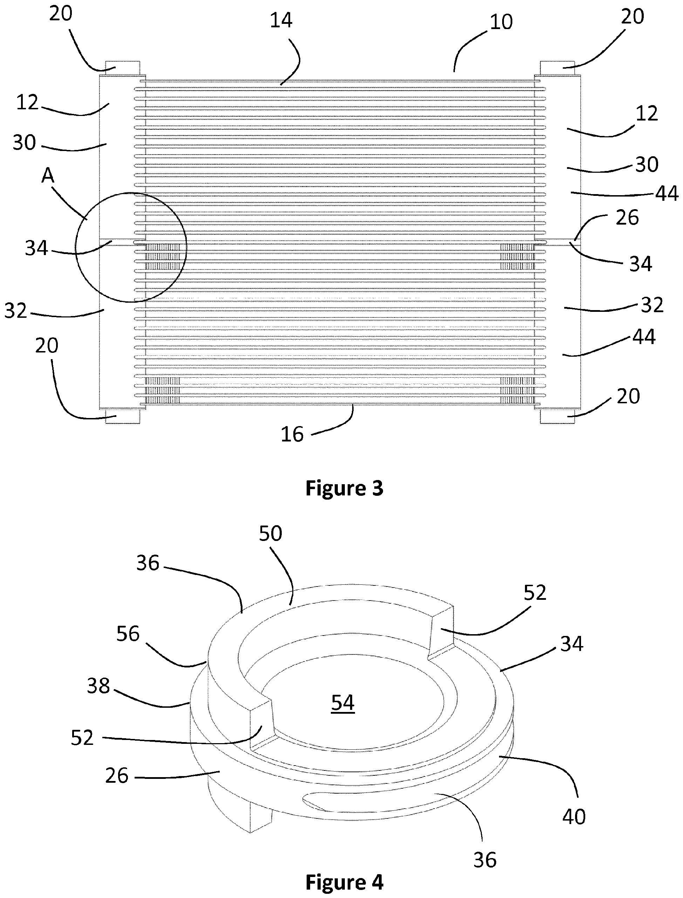

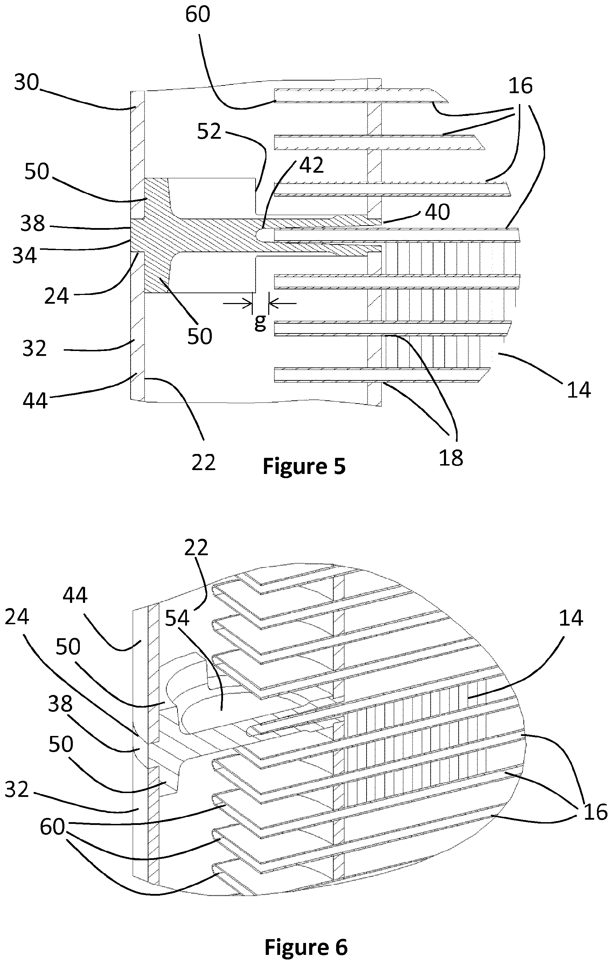

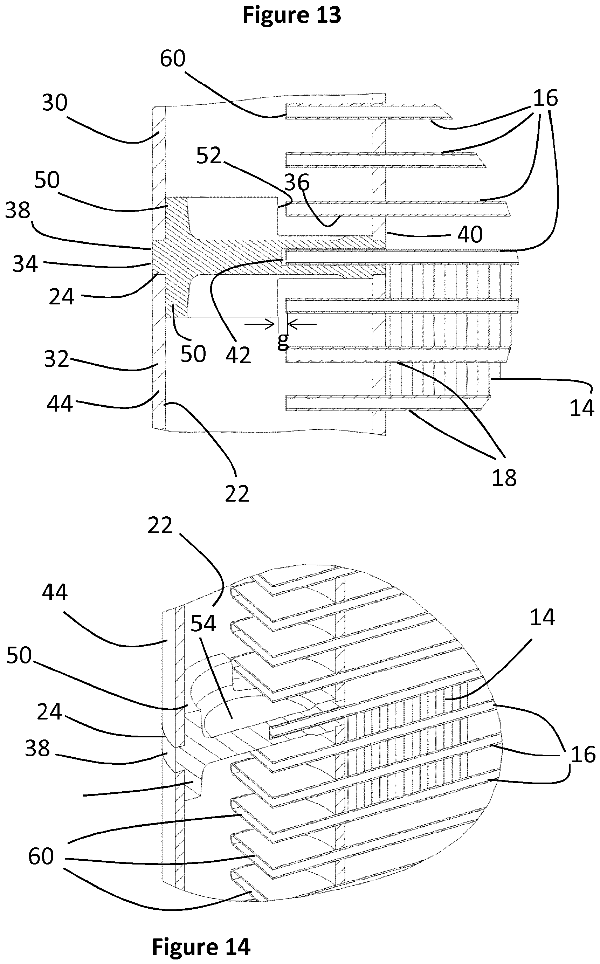

The baffle 34 is a unitary part made of aluminium and may be made by drop forging and finished by machining. As best seen in Figure 4, the baffle 34 comprises a main body 38 in the form of a circular disc. A slot 40 is provided in the circular edge 26 of the disc 38. The slot 40 extends in the plane of the disc 38 and terminates in a wall 42 which extends along a chord of the circular disc 38. The wall 42 is not flat, but is provided as a radius. The slot 40 reaches substantially as far as the centre of the disc 38, as seen in Fig 5. The slot 40 is of constant width but the height tapers down as it goes deeper into the baffle 34. Where the slot is forged, this taper enables the tool to be removed from the slot 40. If the slot is machined, the walls 36 can be parallel, as shown in Figures 13 and 14.

On each side of the circular disc main body 38 is provided a shoulder 50. The shoulder 50 is a wall of constant height which follows the circumference of the disc 38, spaced just inwardly of the circumference. The wall terminates in positions 52 on the diameter of the disc 38 equidistant from the wall 42 of the slot 40.

The major surface 54 of the disc 38 within the shoulder 50 is flat, and is connected to the shoulder 50 through a radius.
The diameter of the disc 38 of the baffle 34 is the same as the diameter of the tubular manifold parts 30, 32.

To assemble the heat exchanger, tubes and fins are arranged in the build machine jig in the same way as before.

One shoulder 50 of the baffle 34 is inserted into the end 24 of the first tubular manifold part 30. The shoulder 50 is an interference fit in the bore 22 of the manifold part 30. The other shoulder 50 of the baffle 34 is then inserted into the end 24 of the bore 22 of the other manifold part 32. The shoulders 50 provide support to the manifold parts 30, 32. The manifold parts 30, 32 and baffle 34 are assembled so that the slots 18 in the manifold parts 30, 32 and the slot 40 in the baffle 34 form a continuous series with all of the slots 18, 40 being equally spaced. The assembled manifold 12 is then offered up to the core 14 so that the ends of the tubes 16 are received in the slots 18 in the manifold parts 30, 32. The end of one of the tubes 16 is received in the slot 40 in the baffle 34. As mentioned, in the assembled manifold 12, the row of slots, comprising the series of slots 18 in the first manifold part, the slot 40 in the baffle and the slots 18 in the second manifold part 32 form a series of slots which are all equally spaced. In this way, no special measures have to be taken when assembling the tube and the fin core 14 in the jig of the build machine. The core 14 can be assembled in exactly the same way as for the heat exchanger of Figure 1.

Once the heat exchanger 10 has been assembled, it is heated in order to soften or melt the cladding material to create braze joints between the tubes 16 and the manifold parts 30, 32 and also between the baffle 34 and the tube 16 received in the slot 40. The brazing operation will also braze the manifold parts 30, 32 to the baffle 34.

It is thus seen that the heat exchanger 10 is in effect two heat exchangers with two cores as, looking at Figure 3, the first manifold parts 30 and the top half of the core 14 form a first heat exchanger and the second manifold parts 32 and the lower half of the core 14 forms a second heat exchanger, the flow through the heat exchangers being completely separated from one another. The baffle 34 blocks one end 24 of the bores 22 of the manifold parts 30, 32, and the disc 38 of the baffle 34 separates the ends 24 of the first and second manifold parts 30, 32 so that the circular periphery 26 of the disc 38 is flush with the outer surface of each manifold part 30, 32. If there should be a leak between one of the manifold parts 30, 32 and the baffle 34, the leak would be to atmosphere, and not into the other heat exchanger. Such a leak would be detectable and repairable.

As shown in Figure 5 and Figure 6, when the manifold 12 is offered up to the tubes, the tubes are inserted into the slots 18, 40 to only a limited distance so that a gap "g" is left between the ends 60 of the tubes 16 and the ends 52 of the shoulder 50, or no gap may be left.

The tube 16 which is received in the slots 40 of the baffles 34 of the heat exchanger does not receive any heat exchange fluid, but will provide thermal cycle fatigue resistance, reducing the thermal gradient across the two cores.

In a variant on this embodiment, braze paste may be applied to the outer surface 56 of the shoulder 50. In this way, the shoulder 50 will braze to the inside surface 22 of the manifold parts 30, 32. As an alternative to the use of braze paste, a braze ring maybe used. As a further alternative, each manifold part 30, 32 may be double clad, so that it is clad on both its inner surface 22 as well as its outer surface 44 and in that way will braze to the shoulder 50. In a further variant, the shoulder 50 is not an interference fit in the bore 22 of the manifold parts 30, 32. In that case, the parts of the manifold may be held together by tack welding the baffle 34 to the manifold parts 30, 32.

In a further variant, the end wall 42 of the slot 40 may not extend along a diameter, but may be on a different chord of the circular disc or in a different position. The end walls 52 of the shoulders 50 also need not be aligned with the end wall 42 of the slot 40.

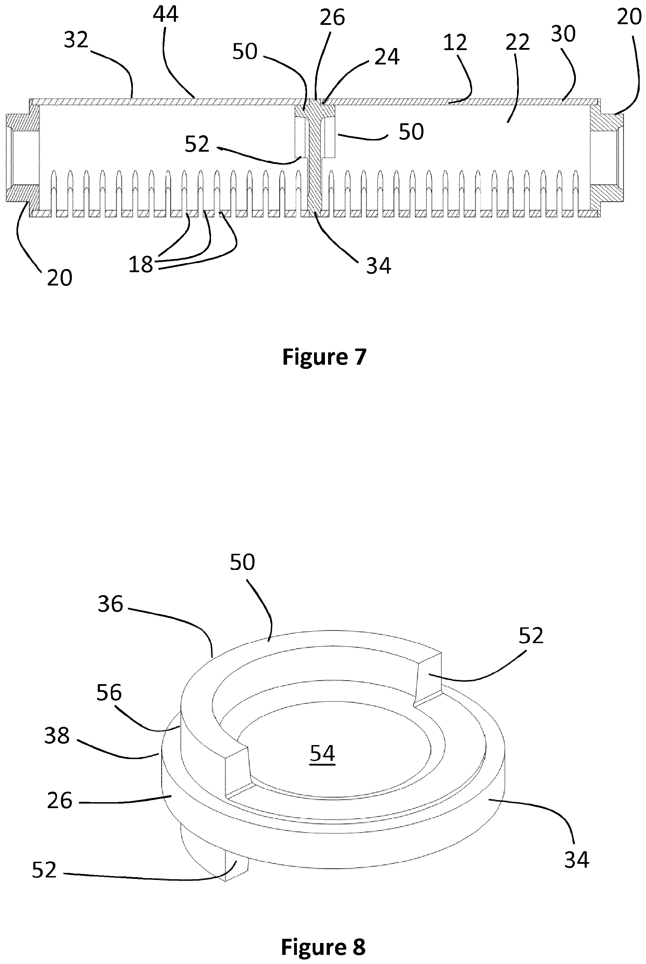

Figures 7, 8 and 9 show a second embodiment of the invention. The second embodiment is similar to the first and only the differences will be described. The same reference numerals will be used for equivalent features.

The baffle 34 of the second embodiment does not include a slot 40. Because the slot 40 is not provided, the tube 16 adjacent the baffles 34 has to be shorter than
the other tubes, which means that extra care is needed in setting up the core 14 in the build machine in order to ensure that a shorter tube is in place, and that it is in the right location with respect to the location of the baffle along the manifold. Rather than the short tube, a blanking plate 58 can be used.

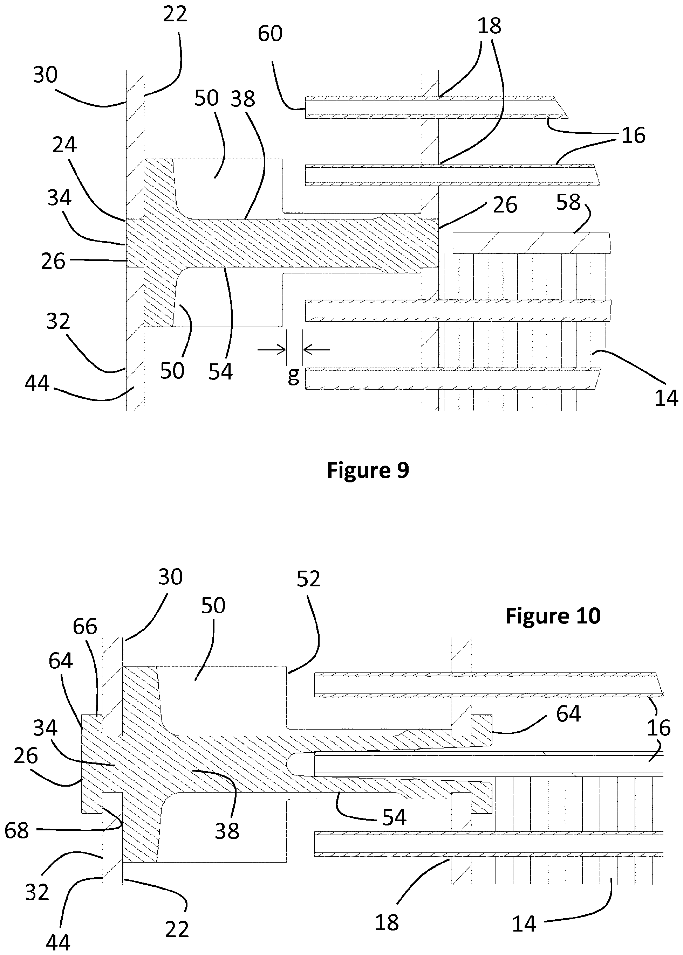

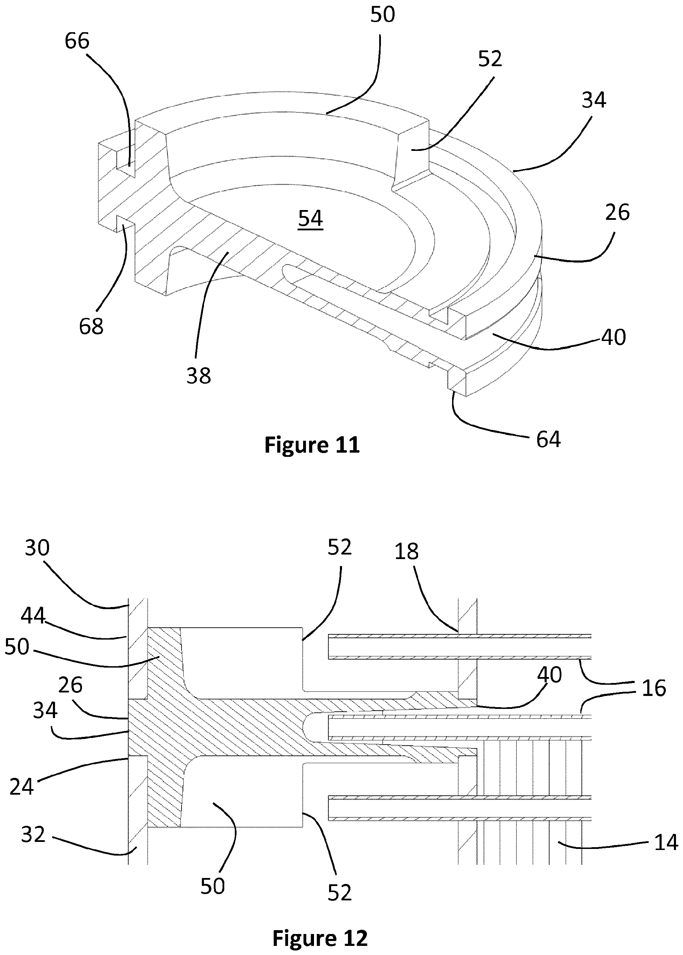

Figures 10 and 11 show the third embodiment. The third embodiment is similar to the first embodiment and only the differences from the first embodiment will be described. The same reference numerals will be used for equivalent features.

The baffle 34 of the third embodiment is the same as the baffle of the first embodiment except that in this case the main body disc 38 of the baffle 34 is of greater diameter than the manifold parts 30, 32 and includes a rim 64 extending axially all around the circumference in both axial directions. The rim 64 and shoulder 50 define between them a channel 66 to receive the end of a manifold part 30, 32. This increases the strength of the joint between the baffle 34 and the manifold parts 30, 32 prior to brazing. It also means that the inner wall 68 of the rim 64 is in direct contact with the clad outer surface of the manifold part 30, 32 so that a good brazed joint can be formed between the baffle 34 and the manifold part 30, 32. Braze paste may also be used on the shoulder 50 to provide a good, robust, leak free construction.

Figure 12 shows the fourth embodiment. The fourth embodiment is similar to the first embodiment and only the differences will be described. The same reference numerals will be used for equivalent features.

In the fourth embodiment, the slot 40 in the baffle 34 is wider so that the tube 16 received in the slot 40 does not touch the walls of the slot 40 and therefore does not braze to them. In this case, the tube 16 in the slots 40 will be unsupported, thus allowing it to expand and contract freely, thereby reducing the thermal stress on the two adjacent tubes of the core 14. This will increase the thermal cycle durability.

In a further variant, the baffle 34 may include two slots 40 to receive the ends of two adjacent tubes 16 of the core. This will improve the thermal cycle durability.

In a further variant, one or more additional manifold parts are connected through one or more additional baffles 34 in order to provide a heat exchanger with three or more cores.

By means of the invention, a single heat exchanger with multiple cores can be built as one core on a core build machine rather than making two separate cores which are joined at a later stage. The baffle 34 prevents fluid bypass from one manifold part 30 to the next.

The part of the heat exchanger including the baffle 34 may be made from aluminium or other heat exchanger material such as copper or stainless steel.

## Claims

1. A manifold for a heat exchanger with more than one core, the manifold comprising a first tubular manifold part and a second tubular manifold part, the ends of the first and second manifold parts being connected through a baffle which is arranged to block the tubular openings, the baffle substantially separating the ends of the first and second manifold parts, wherein the cross-section of the baffle is larger than the end of the first manifold part to which it is connected and larger than the cross-section of the end of the second manifold part to which it is connected, and the baffle includes an axially extending rim in each axial direction which extends over the end of a manifold part and the baffle includes a shoulder to lie inside the bore of the first manifold part and includes a second shoulder to lie inside the bore of the second manifold part, wherein the shoulder and rim define a channel therebetween, the channel receiving the end of the manifold part.

2. A manifold as claimed in claim 1, wherein the shoulder extends around at least a quarter of the periphery of the baffle, or wherein the shoulder extends around at least a third of the periphery of the baffle.

3. A manifold as claimed in claim 1 or claim 2, wherein the shoulder extends over no more than two thirds of the periphery of the baffle, or wherein the shoulder extends over a half or less of the periphery.

4. A manifold as claimed in any preceding claim, wherein the baffle is attached to each of the tubular manifold parts, particularly wherein the baffle is attached to each of the tubular manifold parts through braze paste applied to one of the contact surfaces.

5. A manifold as claimed in any preceding claim, wherein the manifold is a manifold for a tube and fin heat exchanger core and each manifold part includes a series of slots to receive tubes.

6. A manifold as claimed in claim 5, wherein the slots are equally spaced along the length of the manifold.

7. A manifold as claimed in claim 5 or claim 6, wherein the baffle defines a tube receiving slot.

8. A manifold as claimed in any of claims 1 to 6, wherein the body of the baffle between the ends of the first and second manifold parts is solid, particularly wherein the baffle is forged and/or wherein the manifold includes a third tubular manifold part, the ends of the second manifold part and third manifold part being connected through a baffle which is arranged to block the tubular openings, the baffle substantially separating the ends of the second and third manifold parts.

9. A heat exchanger assembly including two heat exchange cores and a manifold as claimed in any preceding claim.

10. A heat exchanger as claimed in claim 9, wherein, where the baffle defines a tube receiving slot, the walls of the baffle slot are brazed to the end of the tube, or wherein, where the baffle defines a tube receiving slot, the baffle slot is sufficiently wide that the tube does not touch or braze to the walls of the baffle slot, or wherein, where the body of the baffle between the ends of the first and second manifold parts is solid, a blank plate or a tube which is shorter than the other tubes of the core is positioned opposite the baffle.

11. A heat exchanger as claimed in claims 9 or claim 10, wherein each manifold part is double clad, so that it includes braze cladding on both its inner and outer surfaces.

12. A method of assembling a heat exchanger for assembly for brazing, the method comprising: arranging tubes and fins in a build machine jig, assembling a manifold as claimed in any of claims 1 to 8 by attaching the first manifold part to the baffle and attaching the second manifold part to the baffle;
offering up the manifold to the tubes and fins so that the tubes are received in the slots in the manifold parts;
heating the assembly to braze the components together.

13. A method as claimed in claim 12, wherein the baffle is attached to the manifold parts by the baffle being an interference fit in the end of each manifold part, or wherein the baffle is attached to the manifold parts by tack welding the baffle to the manifold parts.

14. A method as claimed in either of claims 12 or claim 13, wherein the method includes inserting a braze ring between the baffle and each manifold part.

15. A method as claimed in any of claims 12 to 14, wherein the method includes the step of applying braze paste to each shoulder prior to attaching the manifold parts to the baffle so that the braze paste is sandwiched between the shoulder and the manifold part and creates a brazed joint between the shoulder and manifold parts after heating and/or wherein in the step of offering up the manifold to the tubes, the tubes are inserted into the slots to a limited distance such that a gap is left between the ends of the tubes and the shoulders of the baffle.
